# FASCICULE DE BREVET EUROPEEN

(11) **EP 3 651 624 B1**
(45) Date de publication et mention de la délivrance du brevet: **12.05.2021**
(21) Numéro de dépôt: 18752818.7
(22) Date de dépôt: 09.07.2018
(51) Int. Cl.: A47J 36/10, A47J 43/07

(54) **APPAREIL DE PRÉPARATION CULINAIRE ET SON PROCÉDÉ DE CONTRÔLE**
NAHRUNGSMITTELZUBEREITUNGSVORRICHTUNG UND VERFAHREN ZU IHRER STEUERUNG
FOOD PREPARATION DEVICE AND METHOD FOR CONTROLLING SAME

(30) Priorité: 12.07.2017 FR 1756622
(43) Date de publication de la demande: 20.05.2020
(73) Titulaire: SEB S.A., 69130 Ecully (FR)
(72) Inventeur: BEULE, Mickael, 14400 Nonant (FR); DURAND, Lionnel, 50810 Saint Pierre de Semilly (FR)
(74) Mandataire: SEB Développement
(86) Numéro de dépôt international: PCT/FR2018/051725
(87) Numéro de publication internationale: WO 2019/012216

(56) Documents cités:
- WO-A1-2013/124723
- US-A- 4 335 860
- US-B1- 6 340 124

## Description

La présente invention concerne de manière générale les appareils de préparation culinaire, et en particulier les appareils de préparation culinaire agencés pour chauffer et travailler automatiquement des aliments à préparer préalablement placés dans une cuve de travail par un utilisateur. Typiquement, l'invention concerne un robot ménager comprenant une cuve dans laquelle l'utilisateur place des ingrédients, pour ensuite la fermer avec un couvercle, et le robot ménager prépare ensuite automatiquement un plat prêt à être consommé, en chauffant et travaillant les ingrédients de la cuve de travail.

Il est connu dans l'art antérieur des robots ménagers, tel que celui présenté dans le document WO2014/026866 A1. L'appareil de préparation divulgué dans ce document est complexe car il comporte un couvercle qui peut être bloqué sur la cuve de travail par des arbres longitudinaux ancrés dans un retour vertical de l'appareil de préparation culinaire. En conséquence, il faut prévoir un châssis complexe et robuste (qui forme donc un col de cygne), ce qui est couteux, et volumineux. En conséquence, l'accès à la cuve de travail est limité par ces organes latéraux de blocage, et l'ergonomie d'utilisation s'en trouve limitée. Enfin, la commande des organes de blocage nécessite le fonctionnement d'un motoréducteur en association avec des capteurs de fin de course. Ces capteurs de fin de course doivent être intégrés à la structure du châssis. Le système global est donc complexe et couteux, le procédé de contrôle étant lui aussi complexe, en raison des capteurs à gérer.

Un but de la présente invention est de répondre aux inconvénients de l'art antérieur mentionnés ci-dessus et en particulier, tout d'abord, de proposer un procédé de contrôle du fonctionnement d'un appareil de préparation culinaire qui présente une structure simple, tout en garantissant une fiabilité et une sécurité d'utilisation sans risque de blessure pour l'utilisateur. De plus, l'invention concerne aussi l'appareil de préparation culinaire.

Pour cela un premier aspect de l'invention concerne un procédé de contrôle du fonctionnement d'un appareil de préparation culinaire, ledit appareil de préparation culinaire comprenant :
- un boîtier,
- une cuve montée sur le boîtier et agencée pour recevoir des aliments à préparer,
- au moins un organe mobile de travail disposé dans la cuve et agencé pour travailler les aliments reçus dans la cuve,
- un moteur d'agitation disposé dans le boîtier et agencé pour mettre en mouvement l'organe mobile de travail,
- un couvercle amovible agencé pour conférer à la cuve un état fermé dans lequel la cuve est fermée par le couvercle,
- des moyens de verrouillage du couvercle sur la cuve,
   le couvercle étant agencé pour pouvoir être déplacé lorsque la cuve est dans son état fermé entre :
   - une position déverrouillée sur la cuve, dans laquelle le couvercle est dégagé des moyens de verrouillage, et
   - une position verrouillée sur la cuve, dans laquelle le couvercle coopère avec les moyens de verrouillage,
- de préférence des moyens de chauffage agencés pour fournir une chaleur de cuisson aux aliments reçus dans la cuve,
- des moyens de sécurisation du verrouillage du couvercle en position verrouillée, comportant :
   - au moins un organe de blocage mobile entre une première position dans laquelle le mouvement du couvercle depuis la position verrouillée vers la position déverrouillée est autorisé, et une deuxième position dans laquelle l'organe de blocage entrave le mouvement du couvercle depuis la position verrouillée vers la position déverrouillée,
   - un motoréducteur agencé pour agir sur l'organe de blocage de manière à lui permettre de se déplacer entre sa première position et sa deuxième position, (ou accouplé à l'organe de blocage pour déplacer l'organe de blocage entre la première position et la deuxième position).
   Le procédé de contrôle comprend les étapes consistant à
- estimer un paramètre représentatif d'un couple fourni par le motoréducteur pendant une commande du motoréducteur (ou des moyens de sécurisation du verrouillage),
- comparer l'estimation dudit paramètre avec un seuil prédéterminé, et
- interdire le fonctionnement du moteur d'agitation et/ou des moyens de chauffage tant que l'estimation dudit paramètre au cours d'une commande des moyens de sécurisation du verrouillage demeure inférieure au seuil prédéterminé dans un intervalle de temps compris entre un temps de déplacement minimal prédéterminé et un temps de déplacement maximal prédéterminé, décomptés à partir de la génération d'un signal de commande du motoréducteur (c'est-à-dire son démarrage).

L'appareil de préparation culinaire, dont le fonctionnement est contrôlé par le procédé selon la mise en œuvre ci-dessus, reste simple, puisque la position verrouillée (fermée) du couvercle est sécurisée par un organe de blocage (une tige) qui empêche toute rotation relative entre la cuve et le couvercle. Le couvercle ne peut pas être manœuvré pour ouvrir la cuve, et la tige est un organe simple à déplacer, sans effort à exercer sur le couvercle (puisque celui-ci est déjà accouplé et verrouillé avec la cuve). En résumé, lors de l'utilisation, le couvercle est tout d'abord posé sur la cuve par l'utilisateur pour la fermer (le couvercle est en position déverrouillée), puis, cuve toujours fermée, le couvercle est déplacé par l'utilisateur pour aller dans la position verrouillée (par les moyens de verrouillage), et il peut alors être bloqué dans cette position par les moyens de sécurisation du verrouillage (la tige).

Le procédé selon la mise en œuvre ci-dessus permet de garantir que le couvercle est en position verrouillée sans nécessiter d'implanter des capteurs de fin de course, car une estimation d'un paramètre représentatif de couple est effectuée et aucune commande n'est autorisée si une montée de couple n'a pas lieu dans un intervalle de temps prédéterminé. En d'autres termes, le fonctionnement est interdit si le motoréducteur ne fourni aucun couple représentatif d'une fin de course à un instant attendu. Dans la présente demande, estimer un paramètre signifie déterminer une valeur de ce paramètre, par exemple par une ou plusieurs mesures et calcul éventuel pour pouvoir comparer l'estimation (la valeur) du paramètre suivi avec un seuil prédéterminé.

Avantageusement, les moyens de verrouillage du couvercle sur la cuve sont du type à baïonnette. De tels moyens de verrouillage sont pratiques et permettent une action de verrouillage simultanément au déplacement du couvercle vers la position verrouillée. Il est à noter que les moyens de verrouillage sont distincts des moyens de sécurisation du verrouillage. En particulier, le couvercle est déplacé de sa position déverrouillée vers la position verrouillée par l'utilisateur, pour y être verrouillé par un organe de verrouillage (une baïonnette par exemple). Ensuite seulement l'organe de blocage des moyens de sécurisation du verrouillage coopère ou s'engage avec le couvercle pour le bloquer. En d'autres termes, l'organe de blocage ne fait pas partie des moyens de verrouillage.

Avantageusement, le fonctionnement du moteur d'agitation et/ou des moyens de chauffage est autorisé si au cours d'une commande des moyens de sécurisation du verrouillage, l'estimation du paramètre est supérieure au seuil prédéterminé à un instant compris entre un temps intermédiaire et le temps de déplacement maximal prédéterminé, le temps intermédiaire étant compris entre le temps de déplacement minimal prédéterminé et le temps de déplacement maximal prédéterminé. Le temps intermédiaire est supérieur au temps de déplacement minimal, et inférieur au temps de déplacement maximal. Entre le temps intermédiaire et le temps de déplacement maximal, il suffit que le couple fourni dépasse un pic (et donc le paramètre dépasse le seuil) entre ce temps intermédiaire et le temps de déplacement maximal pour autoriser le fonctionnement de l'appareil de préparation culinaire (moteur d'agitation et/ou moyens de chauffe). En condition supplémentaire, on peut envisager d'autoriser le fonctionnement de l'appareil de préparation culinaire (moteur d'agitation et/ou moyens de chauffe) uniquement si le couple fourni dépasse un pic suffisamment longtemps, ou après deux ou plusieurs estimations (ou mesures) supérieures au seuil.

Avantageusement, le fonctionnement du moteur d'agitation et/ou des moyens de chauffage est autorisé si, au cours d'une commande des moyens de sécurisation du verrouillage, l'estimation du paramètre est supérieure au seuil prédéterminé et si une variation dudit paramètre en fonction du temps est supérieure à une pente prédéterminée, à un instant compris entre le temps de déplacement minimal prédéterminé et le temps intermédiaire. Selon cette mise en œuvre, entre le temps de déplacement minimal et le temps intermédiaire, deux conditions doivent être remplies pour autoriser le fonctionnement de l'appareil de préparation culinaire (moteur d'agitation et/ou moyens de chauffe) : le dépassement d'un seuil, et le dépassement d'un seuil de vitesse de montée d'effort. En effet, la demanderesse s'est aperçue que si le couvercle était mal positionné (le couvercle est entre la position déverrouillée et la position verrouillée), alors l'organe de commande ne peut pas aller dans sa deuxième position, mais bute en cours de déplacement contre le couvercle mal positionné et pousse ce dernier, ce qui provoque un dépassement du pic de couple, mais avec une vitesse de montée d'effort faible. En conséquence, pour distinguer ce cas du cas d'une sécurisation du verrouillage rapide avec un couvercle bien positionné, il faut imposer, pour les instants compris entre le temps de déplacement minimal et le temps intermédiaire, une condition de seuil d'effort ou de couple, mais aussi une condition de seuil de vitesse de variation de l'effort ou du couple fourni par le motoréducteur.

Avantageusement, l'estimation du paramètre n'est pas effectuée ou prise en compte avant un temps préalable prédéterminé, tel que 100 ms, décompté à partir de la génération d'un signal de commande (du démarrage) du motoréducteur. En effet, entre le démarrage et le temps préalable, l'accélération du moteur peut conduire à un couple similaire à un couple fourni en fin de course. Pour ne pas conclure de manière erronée à un blocage, on ne prend pas en compte l'évolution du paramètre en tout début du démarrage.

Avantageusement, si au cours d'une commande des moyens de sécurisation du verrouillage, l'estimation du paramètre est supérieure à un deuxième seuil prédéterminé, inférieur ou égal au seuil prédéterminé, à un instant compris entre le temps préalable prédéterminé et le temps de déplacement minimal prédéterminé, décomptés à partir de la génération d'un signal de commande (du démarrage) du motoréducteur alors un compteur de blocage est incrémenté d'une valeur de 1. Si après la phase d'accélération, le couple fourni augmente avant le temps de déplacement minimal, cela veut dire qu'il y a un blocage. Le procédé peut alors arrêter d'alimenter le motoréducteur pour éviter les surchauffes, et on incrémente un compteur de blocage.

Avantageusement, le procédé de contrôle comprend également une étape consistant à envoyer à l'utilisateur une information de blocage, si le compteur de blocage est incrémenté. L'information peut être l'allumage d'un voyant lumineux, ou l'émission d'un son d'alerte. Cela permet à l'utilisateur de vérifier le montage de l'appareil de préparation culinaire et/ou de tenter de lancer une commande du motoréducteur dans le même sens ou dans un sens contraire de rotation.

Avantageusement, le procédé de contrôle comprend une étape consistant à commander automatiquement un changement de sens de rotation du motoréducteur, simultanément ou ultérieurement à l'étape d'incrémentation du compteur de blocage. L'appareil de préparation culinaire tente alors automatiquement de faire revenir le motoréducteur et l'organe de commande dans la configuration initiale.

Avantageusement, les moyens de sécurisation du verrouillage du couvercle sont considérés comme étant dans un état bloqué si le compteur de blocage dépasse la valeur de 3. Le procédé peut alors comprendre une étape de coupure de l'alimentation, de mise hors service, ou d'information à l'utilisateur.

Avantageusement, les moyens de sécurisation du verrouillage du couvercle sont considérés comme étant dans un état normal de fonctionnement si le compteur de blocage n'est pas incrémenté suite à une commande ultérieure, le procédé comprenant alors une étape de remise à zéro du compteur de blocage.

Avantageusement, l'estimation du paramètre est déduite de mesures synchronisées avec un signal de commande du motoréducteur.

Avantageusement, le paramètre représentatif du couple fourni par le motoréducteur est un courant électrique consommé par le motoréducteur. En particulier, on peut prévoir de mesurer une intensité parcourant une résistance montée en série avec le motoréducteur. On peut aussi mesurer une tension aux bornes d'une telle résistance montée en série avec le motoréducteur. Tous ces paramètres mesurés donnent une mesure ou une image du courant consommé et donc du couple fourni par le motoréducteur.

Avantageusement, le motoréducteur est alimenté avec un courant continu. Autrement dit, le signal de commande du motoréducteur est un courant continu, avec une tension tantôt positive ou tantôt négative selon le sens de rotation à conférer au motoréducteur.

Avantageusement, l'estimation du courant consommé par le motoréducteur est obtenue en calculant une valeur moyenne résultant d'un échantillonnage de valeurs du courant d'alimentation du motoréducteur pendant une phase de commande du motoréducteur.

Alternativement, le motoréducteur est alimenté avec un signal de commande carré. Un tel signal carré est aussi appelé signal en créneaux, ou alimentation "tout ou rien". C'est-à-dire qu'il est constitué d'une alternance de plages hautes et de plages basses ou nulles (en tension et/ou en intensité).

Avantageusement, l'estimation du courant consommé par le motoréducteur est obtenue en calculant une valeur moyenne résultant d'un échantillonnage de valeurs de courants au cours de deux impulsions successives hautes d'alimentation du motoréducteur.

Avantageusement, la fréquence d'échantillonnage est de 500 Hz.

Avantageusement, le fonctionnement du moteur d'agitation et/ou des moyens de chauffage est interdit si, au cours d'une commande des moyens de sécurisation du verrouillage, l'estimation dudit paramètre:
- est supérieure au deuxième seuil prédéterminé à un instant compris entre le temps préalable et le temps de déplacement minimal,
- reste inférieure au seuil prédéterminé tout au long de la commande des moyens de sécurisation du verrouillage (c'est à dire à partir du temps préalable, et même après le temps de déplacement maximal, car sans couple fourni, cela peut vouloir dire que le motoréducteur est en panne, ou que l'organe de commande est désaccouplé, ce qui implique une non-sécurisation de la position verrouillée du couvercle).

S'il est nécessaire de sécuriser le verrouillage du couvercle, on peut prévoir d'interdire le fonctionnement du moteur d'agitation et/ou des moyens de chauffage depuis le début de la commande du motoréducteur jusqu'au temps de déplacement minimal, et sous condition entre le temps de déplacement minimal et le temps de déplacement maximal. De même pendant la levée de la sécurisation du verrouillage du couvercle, on peut prévoir d'interdire le fonctionnement du moteur d'agitation et/ou des moyens de chauffage depuis le début de la commande du motoréducteur jusqu'au temps de déplacement minimal, et sous condition entre le temps de déplacement minimal et le temps de déplacement maximal.

Un deuxième aspect de l'invention concerne un appareil de préparation culinaire comprenant :
- un boîtier,
- une cuve montée sur le boîtier et agencée pour recevoir des aliments à préparer,
- au moins un organe mobile de travail disposé dans la cuve et agencé pour travailler les aliments reçus dans la cuve,
- un moteur d'agitation disposé dans le boîtier et agencé pour mettre en mouvement l'organe mobile de travail,
- un couvercle amovible conférant à la cuve un état fermé dans lequel la cuve est fermée par le couvercle,
- des moyens de verrouillage du couvercle sur la cuve,
- le couvercle étant agencé pour être déplacé lorsque la cuve est dans son état fermé entre :
   - une position déverrouillée sur la cuve, dans laquelle le couvercle est dégagé des moyens de verrouillage, et
   - une position verrouillée sur la cuve, dans laquelle le couvercle coopère avec les moyens de verrouillage.
L'appareil de préparation culinaire comprend en outre :
- de préférence des moyens de chauffage agencés pour fournir une chaleur de cuisson aux aliments reçus dans la cuve,
- des moyens de sécurisation du verrouillage du couvercle en position verrouillée, comportant :
   - au moins un organe de blocage, tel qu'une tige comportant une portion de blocage, mobile entre une première position dans laquelle le mouvement du couvercle depuis la position verrouillée vers la position déverrouillée est autorisé, et une deuxième position dans laquelle la portion de blocage entrave le mouvement du couvercle depuis la position verrouillée vers la position déverrouillée,
   - un motoréducteur accouplé à un bras de commande agencé pour déplacer l'organe de blocage entre la première position et la deuxième position,
- des moyens de contrôle du fonctionnement des moyens de sécurisation du verrouillage du couvercle,
- des moyens de commande du motoréducteur agencés pour réaliser soit une sécurisation du verrouillage en amenant l'organe de blocage vers sa deuxième position, soit une suppression de la sécurisation du verrouillage en amenant l'organe de blocage vers sa première position,
les moyens de contrôle étant agencés pour :
- estimer un paramètre représentatif d'un couple fourni par le motoréducteur pendant une commande du motoréducteur par les moyens de commande,
- comparer l'estimation dudit paramètre représentatif du couple fourni avec un seuil prédéterminé, et
- interdire le fonctionnement du moteur d'agitation et/ou des moyens de chauffage tant que l'estimation dudit paramètre au cours d'une commande du motoréducteur demeure inférieure au seuil prédéterminé dans un intervalle de temps compris entre un temps de déplacement minimal prédéterminé et un temps de déplacement maximal prédéterminé, décomptés à partir de la génération d'un signal de commande du motoréducteur (c'est-à-dire son démarrage).

Avantageusement, le moteur d'agitation est un moteur à courant continu.

Avantageusement, le boîtier comprend :
- une première butée agencée pour coopérer avec un premier élément solidaire du bras de commande de manière à définir la première position de l'organe de blocage,
- une deuxième butée agencée pour coopérer avec un deuxième élément solidaire du bras de commande de manière à définir la deuxième position de l'organe de blocage.

Autrement dit, l'appareil de préparation culinaire comprend :
- une première butée reliée au boitier et agencée pour définir la première position de l'organe de blocage,
- une deuxième butée reliée au boitier et agencée pour définir la deuxième position de l'organe de blocage.

Autrement dit, le couvercle amovible est agencé pour fermer la cuve, et lorsque la tige est dans la première position, la portion de blocage est dégagée du couvercle en position verrouillée, et dans la deuxième position, la portion de blocage de la tige est engagée avec le couvercle en position verrouillée

Avantageusement, l'organe de blocage est une tige. Cependant, on peut prévoir un organe de blocage distinct de la tige, tel qu'un organe de blocage pivotant par rapport à la cuve ou au boitier (un basculeur par exemple). L'organe de blocage peut être directement déplacé par le motoréducteur, ou par l'intermédiaire d'un dispositif de transmission. Si désiré, l'organe de blocage peut être associé à un moyen de rappel élastique agencé pour ramener ledit organe de blocage vers la première position, vers la deuxième position, ou vers une autre position.

Un troisième aspect de l'invention concerne un procédé de commande d'un appareil de préparation culinaire comprenant :
- un boîtier,
- une cuve montée sur le boîtier et agencée pour recevoir des aliments à préparer,
- au moins un organe mobile de travail disposé dans la cuve et agencé pour travailler les aliments reçus dans la cuve,
- un moteur d'agitation disposé dans le boîtier et agencé pour mettre en mouvement l'organe mobile de travail selon plusieurs vitesses de travail,
- un couvercle amovible conférant à la cuve un état fermé dans lequel la cuve est fermée par le couvercle,
- des moyens de verrouillage du couvercle sur la cuve,
- le couvercle étant agencé pour être déplacé lorsque la cuve est dans son état fermé entre :
   - une position déverrouillée sur la cuve, dans laquelle le couvercle est dégagé des moyens de verrouillage, et
   - une position verrouillée sur la cuve, dans laquelle le couvercle coopère avec les moyens de verrouillage,
- de préférence des moyens de chauffage agencés pour fournir une chaleur de cuisson aux aliments reçus dans la cuve,
- des moyens de sécurisation du verrouillage du couvercle,
le procédé de commande comprenant les étapes consistant à :
- actionner automatiquement les moyens de sécurisation du verrouillage lors d'un démarrage de l'appareil de préparation culinaire, de sorte à bloquer le couvercle en position verrouillée,
- actionner les moyens de sécurisation du verrouillage de sorte à débloquer le couvercle :
   - simultanément à un arrêt de l'appareil de préparation culinaire, si une température mesurée de la cuve ou des aliments à préparer est inférieure à une température prédéterminée ou si une température de consigne utilisée avant l'arrêt de l'appareil de préparation culinaire est inférieure à une température prédéterminée ou si la vitesse de travail utilisée avant l'arrêt de l'appareil de préparation culinaire est inférieure à une vitesse prédéterminée,
   - à l'issue d'une temporisation de repos comptée à partir d'un arrêt de l'appareil de préparation culinaire, si une température de la cuve ou des aliments à préparer est supérieure à la température prédéterminée, et si la vitesse de travail utilisée avant l'arrêt de l'appareil de préparation culinaire est supérieure à une vitesse prédéterminée.

Le procédé ci-dessus, avec la levée de la sécurisation du verrouillage du couvercle effectuée seulement après la temporisation de repos si les aliments sont chauds et ont été fortement agités, permet de sécuriser l'usage. En effet, l'enceinte reste fermée et le couvercle bloqué en position verrouillée s'il existe un risque de débordement ou d'ébullition, après un chauffage / agitation importants. Le reste du temps, le couvercle peut être retiré immédiatement après l'arrêt, ce qui limite les temps d'attente inutiles (car en dessous de la température prédéterminée ou de la vitesse prédéterminée, il n'y a pas de risque de débordement ou d'ébullition intempestifs).

Avantageusement, la température de la cuve ou des aliments à préparer, est mesurée ou estimée avant ou simultanément à la fin de la préparation des aliments. En d'autres termes, la température de la cuve ou des aliments à préparer est estimée ou mesurée au moins au cours des derniers instants de préparation (dans la dernière minute ou dans les dernières trente secondes ou lors de la dernière étape du programme de préparation culinaire) pour savoir s'il faut sécuriser ou non le verrouillage du couvercle après l'arrêt de l'organe de travail et/ou des moyens de chauffe. L'appareil peut comprendre une sonde de température, ou alors prendre en compte la consigne de température utilisée lors du programme de préparation culinaire.

En ce qui concerne la vitesse de travail, l'appareil peut la mesurer ou l'estimer avant ou simultanément à la fin de la préparation des aliments. En d'autres termes, la vitesse de travail est estimée ou mesurée au moins au cours des derniers instants de préparation (dans la dernière minute ou dans les dernières trente secondes ou lors de la dernière étape du programme de préparation culinaire) pour savoir s'il faut sécuriser ou non le verrouillage du couvercle après l'arrêt de l'organe de travail et/ou des moyens de chauffe. L'appareil peut comprendre un encodeur, ou alors prendre en compte la consigne de vitesse de travail utilisée lors du programme de préparation culinaire. Toutefois, la température de la cuve ou des aliments à préparer et la vitesse de travail ne sont pas nécessairement estimées ou mesurées au même instant, ni simultanément.

Une variante du troisième aspect de l'invention concerne un procédé de commande d'un appareil de préparation culinaire comprenant :
- un boîtier,
- une cuve montée sur le boîtier et agencée pour recevoir des aliments à préparer,
- au moins un organe mobile de travail disposé dans la cuve et agencé pour travailler les aliments reçus dans la cuve,
- un moteur d'agitation disposé dans le boîtier et agencé pour mettre en mouvement l'organe mobile de travail selon plusieurs vitesses de travail,
- un couvercle amovible conférant à la cuve un état fermé dans lequel la cuve est fermée par le couvercle,
- des moyens de verrouillage du couvercle sur la cuve,
- le couvercle étant agencé pour être déplacé lorsque la cuve est dans son état fermé entre :
   - une position déverrouillée sur la cuve, dans laquelle le couvercle est dégagé des moyens de verrouillage, et
   - une position verrouillée sur la cuve, dans laquelle le couvercle coopère avec les moyens de verrouillage,
- de préférence des moyens de chauffage agencés pour fournir une chaleur de cuisson aux aliments reçus dans la cuve,
- des moyens de sécurisation du verrouillage du couvercle en position verrouillée,
le procédé de commande comprenant les étapes consistant à :
- actionner de manière conditionnelle les moyens de sécurisation du verrouillage lors d'un démarrage de l'appareil de préparation culinaire, ou après le démarrage de l'appareil de préparation culinaire, de sorte à bloquer le couvercle en position verrouillée, seulement si une température mesurée de la cuve ou des aliments à préparer est supérieure à une température prédéterminée ou si une température de consigne utilisée avant l'arrêt de l'appareil de préparation culinaire est supérieure à une température prédéterminée, et si la vitesse de travail utilisée est supérieure à une vitesse prédéterminée,
- actionner les moyens de sécurisation du verrouillage de sorte à débloquer le couvercle à l'issue d'une temporisation de repos comptée à partir d'un arrêt de l'appareil de préparation, si les moyens de sécurisation du verrouillage ont été précédemment actionnés de sorte à bloquer le couvercle en position verrouillée.

Le procédé selon la mise en œuvre ci-dessus sécurise l'usage : la sécurisation de la position verrouillée du couvercle n'est activée que si les aliments seront fortement chauffés et agités lors de la préparation à venir, et il ne sera alors débloqué qu'à l'issue de la temporisation de repos. Dans tous les autres cas, le couvercle n'est pas bloqué en position verrouillée.

Avantageusement, la température de la cuve ou des aliments à préparer, est mesurée ou estimée avant ou simultanément à la fin de la préparation des aliments. En d'autres termes, la température de la cuve ou des aliments à préparer est estimée ou mesurée au moins au cours des derniers instants de préparation (dans la dernière minute ou dans les dernières trente secondes ou lors de la dernière étape du programme de préparation culinaire) pour savoir s'il faut sécuriser ou non le verrouillage du couvercle. L'appareil peut comprendre une sonde de température, ou alors prendre en compte la consigne de température utilisée lors du programme de préparation culinaire. On peut aussi prévoir de lancer le verrouillage conditionnel sur la base de la température prévue dans un cycle à venir, avant même que la cuve ou les aliments ne soient à cette température.

En ce qui concerne la vitesse de travail, l'appareil peut la mesurer ou l'estimer avant ou simultanément à la fin de la préparation des aliments. En d'autres termes, la vitesse de travail est estimée ou mesurée au moins au cours des derniers instants de préparation (dans la dernière minute ou dans les dernières trente secondes ou lors de la dernière étape du programme de préparation culinaire) pour savoir s'il faut sécuriser ou non le verrouillage du couvercle. L'appareil peut comprendre un encodeur, ou alors prendre en compte la consigne de vitesse de travail utilisée lors du programme de préparation culinaire. On peut aussi prévoir de lancer le verrouillage conditionnel sur la base de la vitesse de travail prévue dans un cycle à venir, avant même que l'organe mobile de travail ne soit mis en rotation. Toutefois, la température de la cuve ou des aliments à préparer et la vitesse de travail ne sont pas nécessairement estimées ou mesurées au même instant, ni simultanément.

Avantageusement, la temporisation de repos est supérieure ou égale à 5 secondes, et préférentiellement supérieure ou égale à 10 secondes.

Avantageusement, la température prédéterminée est inférieure ou égale à 60°C et de préférence inférieure ou égale à 50°C, et la vitesse prédéterminée correspond à une vitesse de rotation de l'organe mobile de travail inférieure ou égale à 250 tours/min, et de préférence inférieure ou égale à 160 tours/min.

Avantageusement, la vitesse de travail est une vitesse de consigne à imposer à l'organe mobile de travail lors du programme de fonctionnement préétabli, ou la vitesse de travail est une vitesse mesurée de l'organe mobile de travail, à l'aide d'un encodeur par exemple.

Avantageusement, l'arrêt de l'appareil de préparation culinaire est un arrêt du mouvement de l'organe de travail et/ou un arrêt du chauffage de la cuve.

Avantageusement, le procédé de commande comprend, après le démarrage de l'appareil de préparation culinaire, au moins une étape consistant à chauffer les aliments à travailler et au moins une étape consistant à travailler les aliments à préparer avec l'organe mobile de travail.

Avantageusement, le procédé de commande comprend, après le démarrage de l'appareil de préparation culinaire, au moins une étape consistant à mélanger, ou à malaxer, ou à battre, ou à couper, ou à hacher les aliments à préparer.

Typiquement, pour un appareil de préparation culinaire tel que celui objet de l'invention, une vitesse de rotation de l'organe mobile de travail est comprise dans une gamme allant de 0 à 300 tours/min (ou min⁻¹) par exemple, et préférentiellement entre 0 et 200 tours/min. Avantageusement, la vitesse prédéterminée est par exemple une vitesse qui est dans la plage de [70%-100%] et préférentiellement [80%-100%] de la vitesse maximum de la gamme totale de vitesse indiquée ci-dessus. En d'autres termes, on sécurise le verrouillage du couvercle pour toute vitesse supérieure par exemple à 160 tours/min et préférentiellement pour toute vitesse supérieure à 250 tours/min, si la température est supérieure à 50°C ou 60°C, ce qui permet d'empêcher toute ouverture de l'enceinte de travail si un risque d'ébullition ou de débordement est présent, même après l'arrêt du moteur d'agitation entraînant l'organe mobile de travail.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente une vue éclatée en perspective d'un appareil de préparation culinaire selon la présente invention comprenant un boîtier, une cuve et un couvercle ;
- la figure 2 représente une section partielle d'une partie du boîtier de l'appareil de préparation culinaire de la figure 1 sans la cuve, pour montrer un motoréducteur accouplé à une tige occupant une première position et faisant partie de moyens de sécurisation d'un verrouillage du couvercle de l'appareil de préparation culinaire ;
- la figure 3 représente la section partielle de la figure 2, avec le motoréducteur ayant poussé la tige qui occupe une deuxième position ;
- la figure 4 représente un schéma du courant consommé par le motoréducteur lors du passage de la tige de la première position à la deuxième position, lors d'un fonctionnement normal ;
- les figures 5 à 7 représentent des schémas de courant consommé lors de fonctionnements anormaux ou en cas de blocage intempestif du motoréducteur et/ou de la tige ;
- la figure 8 représente un signal d'alimentation du motoréducteur ;
- les figures 9a et 9b représentent une vue du motoréducteur en perspective ;
- la figure 10 représente une vue en perspective d'une partie de l'appareil de préparation culinaire.

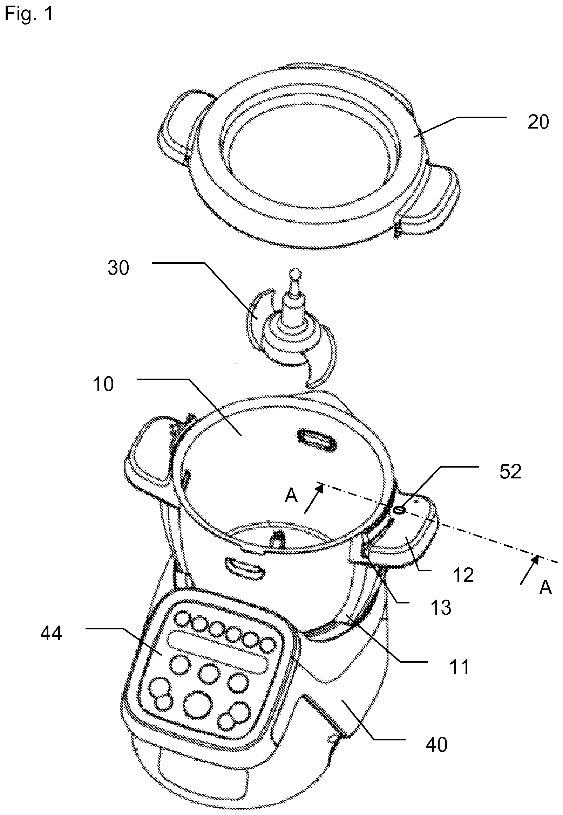

La figure 1 représente un appareil de préparation culinaire avec un boîtier 40, recevant de manière amovible une cuve 10 qui peut contenir un organe mobile de travail 30 et être fermée par un couvercle 20. L'organe mobile de travail, ici un outil de découpe, est placé dans la cuve 10, et se trouve alors accouplé avec un moteur d'agitation situé dans le boîtier 40, pour être entraîné en rotation, une fois la cuve 10 fermée avec le couvercle 20.

La cuve 10 présente deux extensions latérales 11 qui remontent le long de la cuve 10, et qui se terminent par deux poignées 12 au niveau de la partie supérieure de la cuve 10, et comprenant chacune une fente 13. Le couvercle 20 est prévu pour se monter sur la cuve 10 suivant un mouvement de rotation (une liaison pivot est prévue), afin d'engager une partie mâle du couvercle 20 dans les fentes 13, en passant d'une position déverrouillée vers une position verrouillée dans laquelle le couvercle 20 est en position finale sur l'appareil de préparation culinaire. Ce système de verrouillage est par exemple un verrouillage à baïonnette.

En d'autres termes, le couvercle 20 en position déverrouillée ferme la cuve 10, et peut en être retiré librement, mais ne peut plus se soulever de la cuve 10 une fois qu'il a été déplacé vers la position verrouillée, ce qui procure une sécurité d'utilisation lorsque l'organe mobile de travail 30 est en rotation dans la cuve 10. Les moyens de verrouillage à baïonnette évoqués ci-dessus peuvent être élastiques, c'est-à-dire que l'utilisateur en montant le couvercle, fait passer un "cran" au couvercle pour qu'une patte flexible des moyens de verrouillage à baïonnette forme un obstacle à un retour en arrière lors de l'utilisation. Lorsque la préparation est terminée, l'utilisateur en tournant le couvercle 20 en sens inverse déverrouille les moyens de verrouillage à baïonnette en forçant pour passer à nouveau le "cran", et peut retirer le couvercle 20 en finissant de le faire pivoter.

L'appareil de préparation culinaire peut aussi comprendre des moyens de chauffage pour chauffer et/ou cuire des aliments à préparer. Il s'agit typiquement d'une résistance chauffante placée dans le boîtier 40, sur le boîtier 40, sur la cuve 10, ou dans cette dernière.

Typiquement, des aliments à préparer sont placés dans la cuve 10 avec l'organe mobile de travail 30, le couvercle 20 est présenté sur la cuve 10 pour la fermer, puis il est pivoté pour aller de la position déverrouillée à la position verrouillée, et un programme prédéterminé de préparation est sélectionné par l'utilisateur sur un panneau de commande 44 du boîtier 40. L'appareil de préparation culinaire peut comprendre des moyens de détection (des capteurs de présence) qui indiquent que la cuve 10 est en place, et que le couvercle 20 est bien en position verrouillée, avant de lancer la préparation, en chauffant et/ou travaillant les aliments à préparer.

Lors de cette préparation, une vitesse de rotation de l'organe mobile de travail peut être imposée dans une gamme de vitesse allant de 0 à 300 tours/min (300 min⁻¹), par paliers, de manière variable ou constante. Le moteur d'agitation situé dans le boîtier 40 est muni d'un réducteur, et sa vitesse est alors définie en fonction du rapport de réduction. En ce qui concerne les moyens de chauffage, ils peuvent imposer aux aliments à préparer une température allant jusqu'à 130°C par exemple.

En fonction du programme sélectionné, et en particulier lorsqu'un risque de débordement de produit chaud est identifié, il faut pouvoir bloquer le couvercle 20 en position verrouillée, même s'il est déjà verrouillé en position par les moyens de verrouillage décrits ci-dessus.

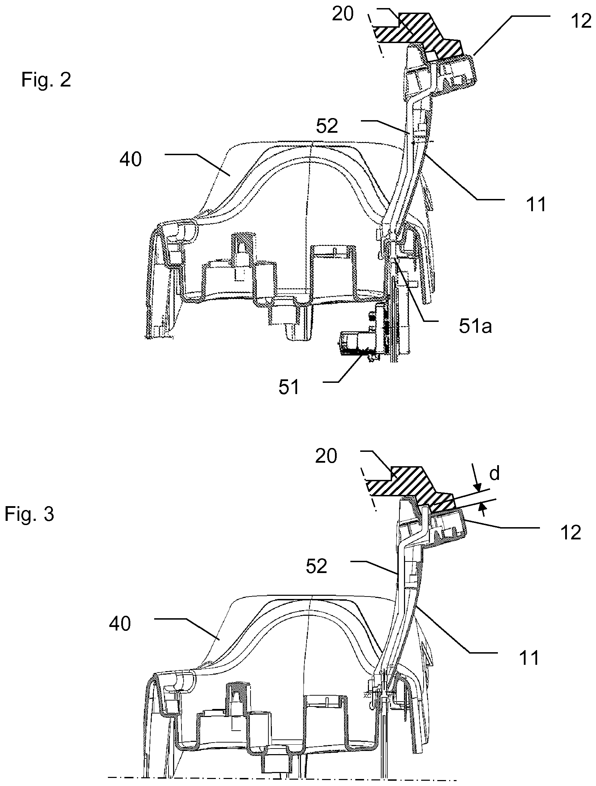

En conséquence, l'appareil de préparation culinaire selon la présente invention comprend des moyens de sécurisation du verrouillage du couvercle en position verrouillée, mis en évidence sur les figures 2 et 3 qui sont une section partielle de l'appareil de préparation culinaire selon l'axe A-A de la figure 1.

Les moyens de sécurisation du verrouillage comprennent notamment un organe de blocage qui est ici une tige 52 logée dans une des extensions latérales 11 de la cuve 10, et un motoréducteur 51 (un moteur à courant continu par exemple) accouplé à un bras de commande 51a (une crémaillère), afin de faire coulisser la tige 52 par rapport au boîtier 40 et à la cuve 10. Dans le cas présent, la tige 52 est montée en liaison glissière sur la cuve 10.

Cependant, on peut envisager à titre d'alternative, de rendre la tige 52 solidaire du boîtier 40 en ajoutant par exemple une extension de boîtier qui remonte jusqu'au couvercle.

Sur les figures 1 et 2, la tige 52 affleure la surface supérieure de la poignée 12, elle n'en dépasse pas. La tige 52 est dans une première position dans laquelle le couvercle 20 fermant la cuve 10 peut être librement pivoté par rapport à la cuve 10. Les moyens de sécurisation du verrouillage sont dits "désactivés".

Sur la figure 3, la tige 52 a été déplacée vers le haut par le motoréducteur 51, ce qui la fait dépasser d'une hauteur d par rapport à la poignée 12, pour faire pénétrer la partie extrémale (une portion de blocage ou d'engagement) de la tige 52 dans une forme femelle du couvercle 20, afin de bloquer le seul degré de liberté (rotation) du couvercle 20, qui se trouve donc bloqué dans la position verrouillée. L'utilisateur ne peut pas pivoter le couvercle 20 pour le retirer de la cuve 10 tant que la tige 52 est dans la deuxième position. Les moyens de sécurisation du verrouillage sont dits "activés".

La deuxième position de la tige 52 est définie par une première butée mécanique entre le bras de commande 51a et le boîtier 40, afin de ne pas exercer d'efforts sur le couvercle 20 en position verrouillée. Cependant, si le couvercle 20 est mal verrouillé et le motoréducteur 51 tout de même lancé, la tige 52 arrivera en butée sur le couvercle 20 mal positionné.

Afin de faire retourner la tige 52 en première position, il faut à nouveau commander le motoréducteur 51 pour qu'il fasse redescendre le bras de commande 51a jusqu'à une deuxième butée, et on peut prévoir un ressort de rappel pour maintenir le contact entre la tige 52 et le bras de commande 51 et ainsi faciliter le retour de la tige 52 vers sa première position. On peut aussi prévoir un accouplement entre le bras de commande 51a et la tige 52 qui garantit que tout mouvement du bras de commande est transmis à la tige 52, pour la faire passer de la première position à la deuxième position, mais aussi de la deuxième position à la première position. Une liaison de type queue d'aronde ou rainure en Té avec accouplement lors d'un mouvement de montage en rotation de la cuve 10 sur le boîtier 40 peut permettre cette fonction. Ainsi, en suivant le mouvement du motoréducteur 51 et la mise en butée via le bras de commande 51a sur le boîtier 40, on garantit la position de la tige 52.

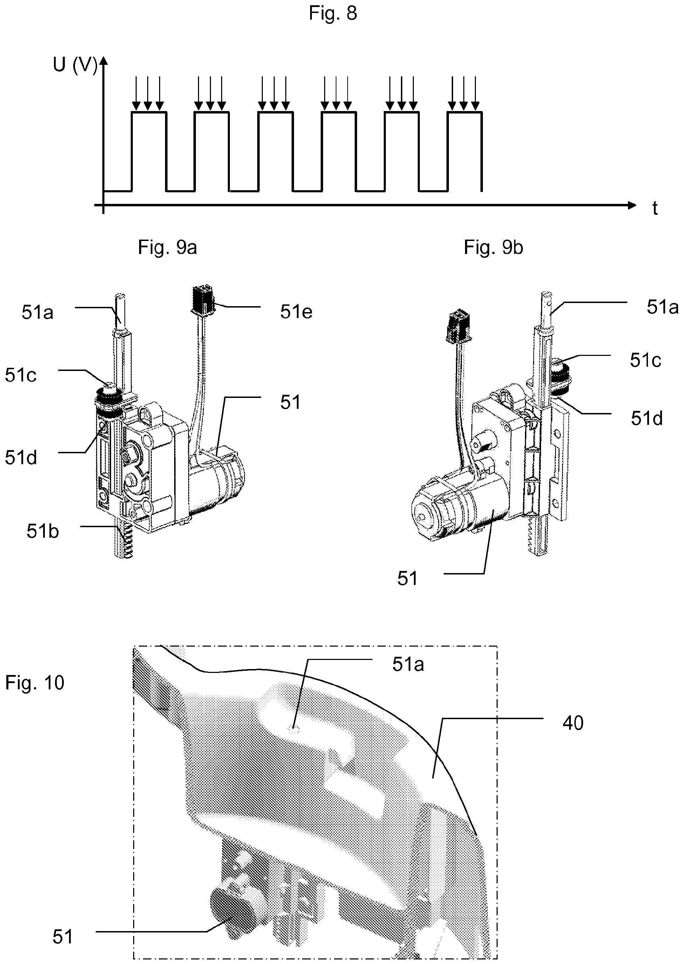

Les figures 9a et 9b représentent une vue selon deux points de vue du motoréducteur 51, qui comprend le bras de commande 51a qui comprend une crémaillère 51b, et un connecteur électrique 51e. Le bras de commande 51a forme une liaison pignon-crémaillère avec le motoréducteur 51, et se trouve guidé en liaison glissière par le boîtier plastique du motoréducteur 51. L'ensemble est alors compact, et le bras de commande 51a embarque deux butées 51c et 51 d qui sont chacune agencée pour entrer en butée avec une portion du boîtier 40 pour assurer une butée de fin de course franche pour le système. La butée 51c assure la butée de fin de course haute (tige 52 en deuxième position) et la butée 51 d assure la butée de fin de course basse (tige 52 dans sa première position).

La figure 10 représente une vue partielle en perspective d'une partie de l'appareil de préparation culinaire, où on voit le motoréducteur 51 agencé dans le boîtier 40, avec la partie haute du bras de commande 51a qui affleure du boîtier 40. Ainsi, lorsque l'utilisateur accouple la cuve 10 (avec la tige 52 logée dans l'extension latérale 11) sur le boîtier 40, la tige 52 se retrouve face au bras de commande 51a, prête à être poussée vers le haut s'il faut sécuriser le verrouillage du couvercle 20.

Lors de la génération d'un signal de commande du motoréducteur 51 pour amener la tige 52 de la première position à la deuxième position, ou inversement, le motoréducteur 51 fournit un couple et consomme du courant, et le procédé de contrôle du fonctionnement selon l'invention propose de suivre la variation du couple pour vérifier si la tige 52 est bien dans la bonne position (qui empêche de tourner à nouveau le couvercle 20) pour autoriser un fonctionnement ultérieur du moteur d'agitation et/ou des moyens de chauffage.

A cet effet, il est proposé de suivre un paramètre représentatif du couple fourni par le motoréducteur 51, tel que le courant consommé. On peut mesurer le courant consommé qui traverse une résistance montée en série avec le motoréducteur 51, ou la tension aux bornes d'une telle résistance. En tout état de cause, il est procédé à une estimation (c'est-à-dire basée sur au moins une mesure) de ce paramètre lors de la commande du motoréducteur 51, et la valeur estimée est ensuite comparée avec une valeur seuil S1 prédéterminée.

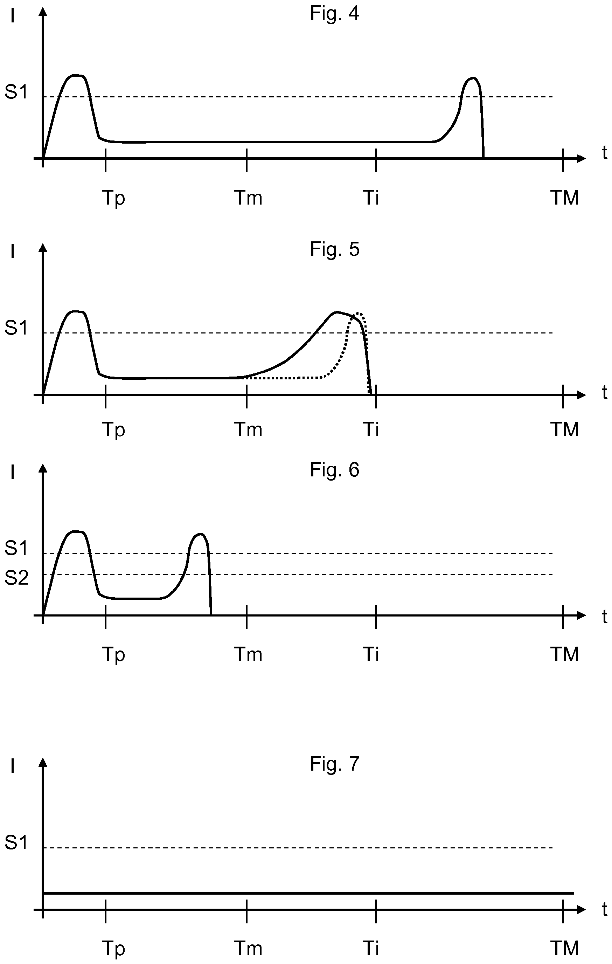

Comme le montre la figure 4, la valeur estimée de ce paramètre (ici le courant ou l'intensité du courant) est suivie au cours du temps, à partir du démarrage du motoréducteur 51 (c'est-à-dire à partir du moment où il est alimenté).

En début de fonctionnement, entre 0 et un temps préalable Tp, le motoréducteur se met en mouvement et consomme un courant d'appel relativement élevé. Ensuite, la consommation devient plus faible, car seuls les frottements du mécanisme sont à vaincre. Enfin, entre un temps de déplacement minimal Tm et entre un temps de déplacement maximal TM, et en particulier après un temps intermédiaire, Ti, on observe un pic de courant qui dépasse la valeur seuil S1. Ce pic de courant correspond à une montée de couple fourni par le motoréducteur 51 car le mécanisme arrive en butée mécanique de fin de course (le bras 51a bute directement contre le boîtier 40 ou un appui solidaire de ce dernier, mais on peut envisager à titre d'alternative que ce soit la tige 52 en deuxième position qui bute contre le couvercle 20, ou contre le boîtier 40 ou un appui solidaire de ce dernier).

Le temps de déplacement minimal est par exemple calculé comme étant le temps mis par un motoréducteur présentant une vitesse de rotation en limite haute de tolérance, pour faire se déplacer la tige 52 sur une course en limite basse de tolérance. On peut aussi effectuer des calculs statistiques pour fixer la limite de temps en dessous de laquelle la tige 52 ne peut pas se trouver en position finale.

En tout état de cause, entre Ti et TM, l'estimation (la valeur estimée) du paramètre dépasse le seuil S1, et alors le procédé peut couper l'alimentation du motoréducteur 51, et autoriser le fonctionnement ultérieur de l'appareil de préparation culinaire (commande du moteur d'agitation et/ou des moyens de chauffe).

Afin de ne pas autoriser de manière erronée le fonctionnement ultérieur de l'appareil de préparation culinaire (commande du moteur d'agitation et/ou des moyens de chauffe), l'estimation du courant n'est pas prise en compte entre le démarrage et le temps préalable Tp, car il s'agit de l'accélération normale du motoréducteur, alors que la tige 52 n'est pas correctement positionnée. En d'autres termes, le procédé interdit le fonctionnement ultérieur de l'appareil de préparation culinaire (commande du moteur d'agitation et/ou des moyens de chauffe) entre le démarrage et le temps préalable Tp. De plus, ne pas prendre en compte ce tel pic initial de courant permet également de ne pas fausser un calcul de valeur moyenne du courant si par exemple un échantillonnage est effectué avec calcul d'une valeur moyenne du courant pour comparer cette valeur moyenne avec un pic ultérieur de courant lors du blocage attendu.

La figure 5 représente un cas où l'utilisateur n'a pas correctement positionné le couvercle 20 en position verrouillée (il est engagé sur la cuve 10 mais pas suffisamment pivoté), mais l'utilisateur a tout de même lancé le cycle de fonctionnement. Lors de la commande du motoréducteur 51, ce dernier pousse la tige 52 qui sort de l'extension latérale 11, mais la tige 52 arrive ensuite en butée sur le couvercle 20 et pousse celui-ci. On voit que le pic de courant dépasse la valeur seuil rapidement, c'est-à-dire entre le temps de déplacement minimal Tm et le temps intermédiaire Ti. Cependant, si on compare la vitesse de montée d'effort (avec la courbe en petits pointillés), on constate que la pente ou la variation en fonction du temps est plus faible dans le cas où le couvercle 20 est mal positionné que dans le cas où le couvercle 20 est correctement positionné. En effet, en cas de positionnement correct, la montée de courant est plus rapide car le mécanisme arrive en butée franche et normale.

Dans le cas où l'estimation du courant dépasse le seuil S1 entre le temps de déplacement minimal Tm et le temps intermédiaire Ti, le procédé de contrôle n'autorise le fonctionnement ultérieur de l'appareil de préparation culinaire que si la valeur estimée dépasse le seuil S1, et si la pente, ou la vitesse de variation, dépasse une pente prédéterminée. Cela permet de distinguer un motoréducteur rapide dans le cas d'un montage correct, d'un motoréducteur plus lent, mais avec un montage incorrect, et une butée intervenant en cours de déplacement de la tige 52.

La figure 6 représente le cas d'un blocage (du motoréducteur 51 et/ou de la tige 52 et/ou du bras 51a), car on peut observer un pic de courant qui dépasse le seuil S1, avant le temps de déplacement minimal Tm. Dans ce cas, on peut conclure à un blocage du système avant que la tige 52 ne sécurise le verrouillage du couvercle 20. Cependant, à titre d'alternative avantageuse, dans la plage temporelle entre le temps préalable Tp et le temps de déplacement minimal Tm, on peut tout à fait déclarer un blocage dès que la valeur estimée dépasse un deuxième seuil S2 représenté figure 6 et inférieur à S1, pour détecter plus rapidement un tel blocage.

Le procédé peut effectuer les étapes suivantes : indiquer un blocage à l'utilisateur, tenter de faire démarrer le motoréducteur dans un autre sens de rotation, incrémenter un compteur de blocage, cesser d'alimenter le motoréducteur. En tout état de cause, le fonctionnement ultérieur de l'appareil de préparation culinaire (commande du moteur d'agitation et/ou des moyens de chauffe) est interdit.

Dans le cas où le procédé ou l'utilisateur tente de redémarrer le motoréducteur dans l'autre sens de rotation et que ce dernier reste bloqué (pic de courant supérieur à S1 avant le temps de déplacement minimal Tm), alors on incrémente encore le compteur de blocage. Si ce compteur de blocage dépasse 3, le système est considéré complétement bloqué et le procédé peut couper toute alimentation, jusqu'à réparation par exemple.

La figure 7 représente un cas de panne, dans lequel le motoréducteur 51 consomme une quantité limitée de courant, qui reste inférieure au seuil S1 tout le long de la commande. Dans ce cas, la tige 52 n'est même pas déplacée, et le procédé interdit donc le fonctionnement ultérieur de l'appareil de préparation culinaire (commande du moteur d'agitation et/ou des moyens de chauffe). Il peut être aussi prévu d'avoir une étape d'affichage d'un message à l'intention de l'utilisateur pour lui indiquer de contacter un service après-vente ou de maintenance par exemple.

Typiquement, le motoréducteur 51 est alimenté avec un courant continu, avec une tension positive pour imposer un premier sens de rotation, ou bien une tension négative pour imposer un deuxième sens de rotation. Le procédé estime alors le courant consommé par le motoréducteur pendant les phases de commande et d'alimentation du motoréducteur.

Cependant, à titre d'alternative, la figure 8 représente un signal d'alimentation du motoréducteur 51 qui est, dans ce cas particulier, un signal du type tout ou rien, qui présente donc une succession de plages hautes et de plages basses (qui peuvent être égales à zéro). On peut parler d'un signal en créneaux ou carré. Dans ce cas particulier, le procédé synchronise la mesure du paramètre indicatif du couple (ici le courant) avec les plages hautes du signal de commande. De plus, comme le montrent les flèches, plusieurs mesures peuvent être effectuées au cours d'une même plage haute, pour former un échantillonnage. On peut par exemple prévoir une fréquence du signal de commande de 50 Hz, et une fréquence d'échantillonnage de 500 Hz, uniquement lorsque le signal de commande est dans une plage haute. On peut alors effectuer des moyennes des mesures, sur par exemple, deux plages hautes successives d'impulsion.

Si le motoréducteur est un moteur à courant continu de 0.98 W alimenté sous 24 V avec un temps de déplacement total nominal de 550 ms, on peut donner les valeurs suivantes, à titre d'exemple :
Temps préalable Tp = 100 ms
Temps de déplacement minimal Tm = 300 ms
Temps intermédiaire Ti = 480 ms
Temps de déplacement maximal TM = 2 s
Seuil S1 = 100 mA
pente de courant seuil : 1.30 mA/ms

Bien entendu, ces valeurs sont des exemples, et peuvent être ajustées en fonction des caractéristiques de puissance, vitesse et course du motoréducteur et de la tige et, d'une manière plus générale, en fonction du dimensionnement de l'appareil.

Comme mentionné ci-dessus, le blocage en position verrouillée du couvercle 20 n'est effectué que si un risque de débordement de produit chaud est identifié. En particulier, l'appareil de préparation culinaire selon la présente invention peut mettre en œuvre un procédé de commande dans lequel les moyens de sécurisation du verrouillage du couvercle en position verrouillée ne sont commandés que si une vitesse de rotation de l'organe mobile de travail est supérieure à une vitesse prédéterminée, et si la température des aliments à préparer est supérieure à une température prédéterminée.

Selon une première variante de ce procédé, on peut prévoir d'actionner systématiquement les moyens de sécurisation du verrouillage pour toujours bloquer le couvercle 20 en position verrouillée, et maintenir pendant une temporisation de repos (au moins cinq secondes, et préférentiellement au moins huit ou dix secondes) les moyens de sécurisation du verrouillage activés après l'arrêt, seulement si au cours du cycle de préparation, la vitesse de rotation de l'organe mobile de travail est (ou a été) supérieure à une vitesse prédéterminée, et si la température des aliments à préparer est (ou a été) supérieure à une température prédéterminée. L'utilisateur doit alors attendre la fin de la temporisation de repos avant de pouvoir ouvrir le couvercle 20. Si ces deux conditions n'ont pas été remplies simultanément, la désactivation des moyens de sécurisation du verrouillage est simultanée à l'arrêt de l'appareil de préparation culinaire et l'utilisateur peut ouvrir immédiatement le couvercle 20.

En d'autres termes, selon cette variante le blocage du couvercle 20 en position verrouillée est systématique, et le déblocage est effectué soit immédiatement ou simultanément à l'arrêt de l'appareil de préparation culinaire si aucun risque de débordement n'est identifié, soit retardé, si un risque de débordement est identifié (température prédéterminée dépassée et vitesse prédéterminée dépassée). Autrement dit, les moyens de sécurisation du verrouillage sont désactivés sous condition.

Selon une deuxième variante de ce procédé, on peut procéder au blocage du couvercle 20 en position verrouillée seulement si les deux conditions sont programmées (c'est-à-dire au démarrage de l'appareil de préparation culinaire, par exemple simultanément au démarrage du mouvement de l'organe mobile de travail ou même après, mais avant que la vitesse dépasse la vitesse prédéterminée et que la température dépasse la température prédéterminée), ou dès que ces deux conditions sont mesurées par l'appareil de préparation culinaire (en cours de programme). On peut alors maintenir les moyens de sécurisation du verrouillage activés pendant toute l'utilisation ultérieure de l'appareil de préparation culinaire, et pendant une temporisation de repos (au moins cinq secondes, et préférentiellement au moins huit ou dix secondes), après arrêt complet de l'organe mobile de travail et/ou du chauffage. Ainsi l'ouverture du couvercle 20 est impossible uniquement lorsqu'un risque de débordement existe.

En d'autres termes, selon cette variante, les moyens de sécurisation du verrouillage ne sont activés au démarrage ou pendant l'utilisation que s'il est prévu ou mesuré de dépasser la vitesse prédéterminée et la température prédéterminée au cours du cycle à venir, et le blocage est maintenu un court instant même après l'arrêt complet de l'appareil de préparation culinaire. On peut prévoir sur l'afficheur 44 d'informer l'utilisateur si l'ouverture est possible ou non. Autrement dit, les moyens de sécurisation du verrouillage sont activés sous condition.

L'appareil de préparation culinaire comprend donc une unité de commande et des moyens de mesure ou d'acquisition de la température, et des moyens de mesure ou d'acquisition de la vitesse de l'organe mobile de travail 30.

On peut utiliser la température des moyens de chauffage, la température de la cuve 10, ou la température des aliments à préparer situés dans la cuve 10. La température prédéterminée peut être 50°C ou préférentiellement 60°C.

En ce qui concerne la vitesse de l'organe mobile de travail 30, on peut choisir de considérer qu'il faut activer les moyens de sécurisation du verrouillage (si la température prédéterminée est dépassée), dès qu'une gamme de vitesse est choisie ou mesurée (par exemple le dernier palier de plusieurs paliers de vitesse préprogrammés), ou dès que la vitesse choisie ou mesurée excède une valeur particulière, par exemple 160 tours/min ou plus préférentiellement 250 tours/min.

Ainsi en bloquant le couvercle 20 en position verrouillée pendant la temporisation de repos, après arrêt de l'agitation et du chauffage des aliments, dès que la vitesse excède la vitesse prédéterminée simultanément à un dépassement de la température prédéterminée, l'ouverture est impossible tant qu'il existe un risque de débordement et/ou ébullition intempestifs.

On comprendra que diverses modifications et/ou améliorations évidentes pour l'homme du métier peuvent être apportées aux différents modes de réalisation de l'invention décrits dans la présente description sans sortir du cadre de l'invention. En particulier, il est fait référence à une portion d'engagement mâle de la tige, qui s'engage dans une forme femelle du couvercle 20, mais on peut prévoir une portion d'engagement femelle mobile de la tige, qui vient s'accoupler avec un index mâle du couvercle 20, ou encore un dispositif à bascule (l'organe de blocage peut notamment être monté pivotant par rapport à la cuve ou par rapport au boîtier). On peut aussi prévoir un entraînement direct de l'organe de blocage par le motoréducteur, ou via une transmission.

## Revendications

1. Procédé de contrôle du fonctionnement d'un appareil de préparation culinaire, ledit appareil de préparation culinaire comprenant :
- un boîtier (40),
- une cuve (10) montée sur le boîtier (40) et agencée pour recevoir des aliments à préparer,
- au moins un organe mobile de travail (30) disposé dans la cuve (10) et agencé pour travailler les aliments reçus dans la cuve (10),
- un moteur d'agitation disposé dans le boîtier (40) et agencé pour mettre en mouvement l'organe mobile de travail (30),
- un couvercle (20) amovible agencé pour conférer à la cuve (10) un état fermé dans lequel la cuve (10) est fermée par le couvercle (20),
- des moyens de verrouillage du couvercle (20) sur la cuve (10),
le couvercle (20) étant agencé pour pouvoir être déplacé lorsque la cuve (10) est dans son état fermé entre :
- une position déverrouillée sur la cuve (10), dans laquelle le couvercle (20) est dégagé des moyens de verrouillage, et
- une position verrouillée sur la cuve (10), dans laquelle le couvercle (20) coopère avec les moyens de verrouillage,
- de préférence des moyens de chauffage agencés pour fournir une chaleur de cuisson aux aliments reçus dans la cuve (10),
- des moyens de sécurisation du verrouillage du couvercle (20) en position verrouillée, comportant :
- au moins un organe de blocage mobile entre une première position dans laquelle le mouvement du couvercle (20) depuis la position verrouillée vers la position déverrouillée est autorisé, et une deuxième position dans laquelle l'organe de blocage entrave le mouvement du couvercle (20) depuis la position verrouillée vers la position déverrouillée,
- un motoréducteur (51) agencé pour agir sur l'organe de blocage de manière à lui permettre de se déplacer entre sa première position et sa deuxième position,
le procédé de contrôle comprenant les étapes consistant à :
- estimer un paramètre représentatif d'un couple fourni par le motoréducteur (51) pendant une commande du motoréducteur (51),
- comparer l'estimation dudit paramètre avec un seuil (S1) prédéterminé, et
- interdire le fonctionnement du moteur d'agitation et/ou des moyens de chauffage tant que l'estimation dudit paramètre au cours d'une commande des moyens de sécurisation du verrouillage demeure inférieure au seuil (S1) prédéterminé dans un intervalle de temps compris entre un temps de déplacement minimal (Tm) prédéterminé et un temps de déplacement maximal (TM) prédéterminé, décomptés à partir de la génération d'un signal de commande du motoréducteur (51).

2. Procédé de contrôle selon la revendication 1, dans lequel le fonctionnement du moteur d'agitation et/ou des moyens de chauffage est autorisé si au cours d'une commande des moyens de sécurisation du verrouillage, l'estimation du paramètre est supérieure au seuil (S1) prédéterminé à un instant compris entre un temps intermédiaire (Ti) et le temps de déplacement maximal (TM) prédéterminé, le temps intermédiaire (Ti) étant compris entre le temps de déplacement minimal (Tm) prédéterminé et le temps de déplacement maximal (TM) prédéterminé.

3. Procédé de contrôle selon la revendication 2, dans lequel le fonctionnement du moteur d'agitation et/ou des moyens de chauffage est autorisé si, au cours d'une commande des moyens de sécurisation du verrouillage, l'estimation du paramètre est supérieure au seuil (S1) prédéterminé et si une variation dudit paramètre en fonction du temps est supérieure à une pente prédéterminée, à un instant compris entre le temps de déplacement minimal (Tm) prédéterminé et le temps intermédiaire (Ti).

4. Procédé de contrôle selon l'une des revendications 1 à 3, dans lequel l'estimation du paramètre n'est pas effectuée ou prise en compte avant un temps préalable (Tp) prédéterminé, tel que 100 ms, décompté à partir de la génération d'un signal de commande du motoréducteur (51).

5. Procédé de contrôle selon la revendication 4, dans lequel si au cours d'une commande des moyens de sécurisation du verrouillage, l'estimation du paramètre est supérieure à un deuxième seuil prédéterminé (S2), inférieur ou égal au seuil (S1) prédéterminé, à un instant compris entre le temps préalable (Tp) prédéterminé et le temps de déplacement minimal (Tm) prédéterminé, décomptés à partir de la génération d'un signal de commande du motoréducteur (51) alors un compteur de blocage est incrémenté d'une valeur de 1.

6. Procédé de contrôle selon la revendication 5, comprenant également une étape consistant à envoyer à l'utilisateur une information de blocage, si le compteur de blocage est incrémenté.

7. Procédé de contrôle selon l'une des revendications 5 ou 6, dans lequel le fonctionnement du moteur d'agitation et/ou des moyens de chauffage est interdit si, au cours d'une commande des moyens de sécurisation du verrouillage, l'estimation dudit paramètre:
- est supérieure au deuxième seuil (S2) prédéterminé à un instant compris entre le temps préalable (Tp) et le temps de déplacement minimal (Tm),
- demeure inférieure au seuil (S1) prédéterminé tout au long de la commande des moyens de sécurisation du verrouillage.

8. Procédé de contrôle selon l'une des revendications 5 à 7, comprenant une étape consistant à commander automatiquement un changement de sens de rotation du motoréducteur (51), simultanément ou ultérieurement à l'étape d'incrémentation du compteur de blocage.

9. Procédé de contrôle selon l'une des revendications 5 à 8, dans lequel les moyens de sécurisation du verrouillage du couvercle (20) sont considérés comme étant dans un état bloqué si le compteur de blocage dépasse la valeur de 3.

10. Procédé de contrôle selon l'une des revendications 5 à 9, dans lequel les moyens de sécurisation du verrouillage du couvercle (20) sont considérés comme étant dans un état normal de fonctionnement si le compteur de blocage n'est pas incrémenté suite à une commande ultérieure, le procédé comprenant alors une étape de remise à zéro du compteur de blocage.

11. Procédé de contrôle selon l'une des revendications 1 à 10, dans lequel le paramètre représentatif du couple fourni par le motoréducteur (51) est un courant électrique consommé par le motoréducteur (51).

12. Procédé de contrôle selon les revendications 1 à 11, dans lequel le signal de commande du motoréducteur (51) est un courant continu et avec une tension tantôt positive ou tantôt négative selon le sens de rotation à conférer au motoréducteur (51).

13. Procédé de contrôle selon la revendication 12, dans lequel l'estimation du courant consommé par le motoréducteur (51) est obtenue en calculant une valeur moyenne résultant d'un échantillonnage de valeurs du courant d'alimentation du motoréducteur (51) pendant une phase de commande du motoréducteur (51).

14. Procédé de contrôle selon la revendication 13, dans lequel la fréquence d'échantillonnage est de 500 Hz.

15. Appareil de préparation culinaire comprenant :
- un boîtier (40),
- une cuve (10) montée sur le boîtier (40) et agencée pour recevoir des aliments à préparer,
- au moins un organe mobile de travail (30) disposé dans la cuve (10) et agencé pour travailler les aliments reçus dans la cuve (10),
- un moteur d'agitation disposé dans le boîtier (40) et agencé pour mettre en mouvement l'organe mobile de travail (30),
- un couvercle (20) amovible conférant à la cuve (10) un état fermé dans lequel la cuve (10) est fermée par le couvercle (20),
- des moyens de verrouillage du couvercle (20) sur la cuve (10),
le couvercle (20) étant agencé pour être déplacé lorsque la cuve (10) est dans son état fermé entre :
- une position déverrouillée sur la cuve (10), dans laquelle le couvercle (20) est dégagé des moyens de verrouillage, et
- une position verrouillée sur la cuve (10), dans laquelle le couvercle (20) coopère avec les moyens de verrouillage,
l'appareil de préparation culinaire comprenant en outre :
- de préférence des moyens de chauffage agencés pour fournir une chaleur de cuisson aux aliments reçus dans la cuve (10),
- des moyens de sécurisation du verrouillage du couvercle (20) en position verrouillée, comportant :
- au moins un organe de blocage, tel qu'une tige (52) comportant une portion de blocage, mobile entre une première position dans laquelle le mouvement du couvercle (20) depuis la position verrouillée vers la position déverrouillée est autorisé, et une deuxième position dans laquelle la portion de blocage entrave le mouvement du couvercle (20) depuis la position verrouillée vers la position déverrouillée,
- un motoréducteur (51) accouplé à un bras de commande (51a) agencé pour déplacer l'organe de blocage entre la première position et la deuxième position,
- des moyens de contrôle du fonctionnement des moyens de sécurisation du verrouillage du couvercle (20),
- des moyens de commande du motoréducteur (51) agencés pour réaliser soit une sécurisation du verrouillage en amenant l'organe de blocage vers sa deuxième position, soit une suppression de la sécurisation du verrouillage en amenant l'organe de blocage vers sa première position,
les moyens de contrôle étant agencés pour :
- estimer un paramètre représentatif d'un couple fourni par le motoréducteur (51) pendant une commande du motoréducteur (51) par les moyens de commande,
- comparer l'estimation dudit paramètre représentatif du couple fourni avec un seuil (S1) prédéterminé, et
- interdire le fonctionnement du moteur d'agitation et/ou des moyens de chauffage tant que l'estimation dudit paramètre au cours d'une commande du motoréducteur (51) demeure inférieure au seuil (S1) prédéterminé dans un intervalle de temps compris entre un temps de déplacement minimal (Tm) prédéterminé et un temps de déplacement maximal (TM) prédéterminé, décomptés à partir de la génération d'un signal de commande du motoréducteur (51).

16. Appareil de préparation culinaire selon la revendication 15, dans lequel le boîtier comprend :
- une première butée agencée pour coopérer avec un premier élément solidaire du bras de commande (51a) de manière à définir la première position de l'organe de blocage (52),
- une deuxième butée agencée pour coopérer avec un deuxième élément solidaire du bras de commande (51a) de manière à définir la deuxième position de l'organe de blocage (52).

## Patentansprüche

1. Verfahren zur Steuerung des Betriebs einer Nahrungsmittelzubereitungseinrichtung, wobei die Nahrungsmittelzubereitungseinrichtung Folgendes umfasst:
- ein Gehäuse (40),
- einen Behälter (10), der auf dem Gehäuse (40) angebracht und für die Aufnahme der zuzubereitenden Nahrungsmittel eingerichtet ist,
- mindestens ein bewegliches Arbeitselement (30), das in dem Behälter (10) angeordnet ist und dazu eingerichtet ist, die in dem Behälter (10) aufgenommenen Nahrungsmittel zu bearbeiten,
- einen Rührmotor, der im Gehäuse (40) angeordnet ist und dazu eingerichtet ist, das bewegliche Arbeitselement (30) in Bewegung zu versetzen,
- einen abnehmbaren Deckel (20), der dazu eingerichtet ist, den Behälter (10) in einen geschlossenen Zustand zu versetzen, wobei der Behälter (10) durch den Deckel (20) verschlossen wird,
- Mittel zum Verriegeln des Deckels (20) auf dem Behälter (10),
wobei der Deckel (20) so eingerichtet ist, dass er bewegt werden kann, wenn sich der Behälter (10) in seinem geschlossenen Zustand befindet, zwischen:
- einer entriegelten Position auf dem Behälter (10), in welcher der Deckel (20) von den Verriegelungsmitteln gelöst ist, und
- einer verriegelten Position auf dem Behälter (10), in welcher der Deckel (20) mit den Verriegelungsmitteln zusammenwirkt,
- bevorzugt Heizmittel, die dazu eingerichtet sind, eine Kochwärme für die in dem Behälter (10) aufgenommenen Nahrungsmittel bereitzustellen,
- Mittel zur Sicherung der Verriegelung des Deckels (20) in der verriegelten Position, bestehend aus:
- mindestens einem Blockierelement, das beweglich ist zwischen einer ersten Position, in welcher die Bewegung des Deckels (20) aus der verriegelten Position in die entriegelte Position autorisiert wird, und einer zweiten Position, in welcher das Blockierelement die Bewegung des Deckels (20) aus der verriegelten Position in die entriegelte Position verhindert,
- einem Getriebemotor (51), der dazu eingerichtet ist, auf das Blockierelement derart einzuwirken, dass es ihm ermöglicht wird, sich zwischen seiner ersten Position und seiner zweiten Position zu bewegen,
wobei das Steuerungsverfahren die folgenden Schritte umfasst:
- Schätzen eines Parameters, der für ein von dem Getriebemotor (51) während einer Steuerung des Getriebemotors (51) bereitgestelltes Drehmoment repräsentativ ist,
- Vergleichen der Schätzung des Parameters mit einem vorbestimmten Schwellenwert (S1), und
- Unterbinden des Betriebs des Rührmotors und/oder der Heizmittel, solange die Schätzung des Parameters während einer Steuerung der Mittel zur Sicherung der Verriegelung in einem Zeitintervall zwischen einer vorbestimmten minimalen Bewegungszeit (Tm) und einer vorbestimmten maximalen Bewegungszeit (TM), abwärts gezählt von der Erzeugung eines Steuersignals des Getriebemotors (51), unter dem vorbestimmten Schwellenwert (S1) bleibt.

2. Steuerungsverfahren nach Anspruch 1, wobei der Betrieb des Rührmotors und/oder der Heizmittel autorisiert wird, wenn während einer Steuerung der Mittel zur Sicherung der Verriegelung die Schätzung des Parameters zu einem Zeitpunkt zwischen einer Zwischenzeit (Ti) und der vorbestimmten maximalen Bewegungszeit (TM) über dem vorbestimmten Schwellenwert (S1) liegt, wobei die Zwischenzeit (Ti) zwischen der vorbestimmten minimalen Bewegungszeit (Tm) und der vorbestimmten maximalen Bewegungszeit (TM) liegt.

3. Steuerungsverfahren nach Anspruch 2, wobei der Betrieb des Rührmotors und/oder der Heizmittel autorisiert wird, wenn während einer Steuerung der Mittel zur Sicherung der Verriegelung die Schätzung des Parameters über dem vorbestimmten Schwellenwert (S1) liegt, und wenn eine Änderung des Parameters in Abhängigkeit von der Zeit größer ist als eine vorbestimmte Steigung, zu einem Zeitpunkt zwischen der vorbestimmten minimalen Bewegungszeit (Tm) und der Zwischenzeit (Ti).

4. Steuerungsverfahren nach einem der Ansprüche 1 bis 3, wobei die Schätzung des Parameters nicht vor einer vorbestimmten Vorabzeit (Tp), wie z.B. 100 ms, abwärts gezählt ab der Erzeugung eines Steuersignals des Getriebemotors (51), durchgeführt oder berücksichtigt wird.

5. Steuerungsverfahren nach Anspruch 4, wobei dann, wenn während einer Steuerung der Mittel zur Sicherung der Verriegelung die Schätzung des Parameters über einem zweiten vorbestimmten Schwellenwert (S2) liegt, der kleiner oder gleich dem vorbestimmten Schwellenwert (S1) ist, zu einem Zeitpunkt zwischen der vorbestimmten Vorabzeit (Tp) und der vorbestimmten minimalen Bewegungszeit (Tm), abwärts gezählt von der Erzeugung eines Steuersignals für den Getriebemotor (51), ein Blockierzähler um einen Wert von 1 inkrementiert wird.

6. Steuerungsverfahren nach Anspruch 5, umfassend auch einen Schritt des Sendens einer Blockierinformation an den Benutzer, wenn der Blockierzähler inkrementiert wird.

7. Steuerungsverfahren nach einem der Ansprüche 5 oder 6, wobei der Betrieb des Rührmotors und/oder der Heizmittel unterbunden wird, wenn während einer Steuerung der Mittel zur Sicherung der Verriegelung die Schätzung des Parameters:
- über dem zweiten vorbestimmten Schwellenwert (S2) zu einem Zeitpunkt zwischen der Vorabzeit (Tp) und der minimalen Bewegungszeit (Tm) liegt,
- während der gesamten Steuerung der Mittel zur Sicherung der Verriegelung unter dem vorbestimmten Schwellenwert (S1) bleibt.

8. Steuerungsverfahren nach einem der Ansprüche 5 bis 7, umfassend einen Schritt der automatischen Steuerung einer Änderung der Drehrichtung des Getriebemotors (51), gleichzeitig mit oder im Anschluss an den Schritt des Inkrementierens des Blockierzählers.

9. Steuerungsverfahren nach einem der Ansprüche 5 bis 8, wobei die Mittel zur Sicherung der Verriegelung des Deckels (20) als in einem blockierten Zustand befindlich angesehen werden, wenn der Blockierzähler den Wert 3 überschreitet.

10. Steuerungsverfahren nach einem der Ansprüche 5 bis 9, wobei die Mittel zur Sicherung der Verriegelung des Deckels (20) als in einem normalen Betriebszustand befindlich angesehen werden, wenn der Blockierzähler als Folge eines anschließenden Befehls nicht inkrementiert wird, wobei das Verfahren dann einen Schritt des Zurücksetzens des Blockierzählers auf null umfasst.

11. Steuerungsverfahren nach einem der Ansprüche 1 bis 10, wobei der für das vom Getriebemotor (51) bereitgestellte Drehmoment repräsentative Parameter ein vom Getriebemotor (51) verbrauchter elektrischer Strom ist.

12. Steuerungsverfahren nach einem der Ansprüche 1 bis 11, wobei das Steuersignal für den Getriebemotor (51) ein Gleichstrom ist und mit einer Spannung, die je nach der dem Getriebemotor (51) zu erteilenden Drehrichtung positiv oder negativ ist.

13. Steuerungsverfahren nach Anspruch 12, wobei die Schätzung des vom Getriebemotor (51) verbrauchten Stroms durch Berechnen eines Durchschnittswerts erhalten wird, der sich aus einer Abtastung von Werten des Versorgungsstroms des Getriebemotors (51) während einer Steuerungsphase des Getriebemotors (51) ergibt.

14. Steuerungsverfahren nach Anspruch 13, wobei die Abtastfrequenz 500 Hz beträgt.

15. Nahrungsmittelzubereitungseinrichtung, umfassend:
- ein Gehäuse (40),
- einen Behälter (10), der auf dem Gehäuse (40) angebracht und für die Aufnahme der zuzubereitenden Nahrungsmittel eingerichtet ist,
- mindestens ein bewegliches Arbeitselement (30), das in dem Behälter (10) angeordnet ist und dazu eingerichtet ist, die in dem Behälter (10) aufgenommenen Nahrungsmittel zu bearbeiten,
- einen Rührmotor, der im Gehäuse (40) angeordnet ist und dazu eingerichtet ist, das bewegliche Arbeitselement (30) in Bewegung zu versetzen,
- einen abnehmbaren Deckel (20), der den Behälter (10) in einen geschlossenen Zustand versetzt, wobei der Behälter (10) durch den Deckel (20) verschlossen wird,
- Mittel zum Verriegeln des Deckels (20) auf dem Behälter (10), wobei der Deckel (20) so eingerichtet ist, dass er bewegt werden kann, wenn sich der Behälter (10) in seinem geschlossenen Zustand befindet, zwischen:
- einer entriegelten Position auf dem Behälter (10), in welcher der Deckel (20) von den Verriegelungsmitteln gelöst ist, und
- einer verriegelten Position auf dem Behälter (10), in welcher der Deckel (20) mit den Verriegelungsmitteln zusammenwirkt,
wobei die Nahrungsmittelzubereitungseinrichtung weiter Folgendes umfasst:
- bevorzugt Heizmittel, die dazu eingerichtet sind, eine Kochwärme für die in dem Behälter (10) aufgenommenen Nahrungsmittel bereitzustellen,
- Mittel zur Sicherung der Verriegelung des Deckels (20) in der verriegelten Position, bestehend aus:
- mindestens einem Blockierelement, wie z.B. einer Stange (52), die einen Blockierabschnitt aufweist, der beweglich ist zwischen einer ersten Position, in der eine Bewegung des Deckels (20) aus der verriegelten Position in die entriegelte Position autorisiert ist, und einer zweiten Position, in welcher der Blockierabschnitt die Bewegung des Deckels (20) aus der verriegelten Position in die entriegelte Position verhindert,
- einem Getriebemotor (51), der mit einem Steuerarm (51a) gekoppelt ist, der dazu eingerichtet ist, das Blockierelement zwischen der ersten Position und der zweiten Position zu bewegen,
- Mittel zur Steuerung des Betriebs der Mittel zur Sicherung der Verriegelung des Deckels (20),
- Mittel zur Steuerung des Getriebemotors (51), die dazu eingerichtet sind, entweder die Verriegelung zu sichern, indem sie das Blockierelement in seine zweite Position bewegen, oder die Sicherung der Verriegelung aufzuheben, indem sie das Blockierelement in seine erste Position bewegen,
wobei die Steuerungsmittel eingerichtet sind zum:
- Schätzen eines Parameters, der für ein von dem Getriebemotor (51) während einer Steuerung des Getriebemotors (51) bereitgestelltes Drehmoment repräsentativ ist, durch die Steuerungsmittel,
- Vergleichen der Schätzung des für das Drehmoment repräsentativen Parameters mit einem vorbestimmten Schwellenwert (S1), und
- Unterbinden des Betriebs des Rührmotors und/oder der Heizmittel, solange die Schätzung des Parameters während einer Steuerung des Getriebemotors (51) in einem Zeitintervall, das zwischen einer vorbestimmten minimalen Bewegungszeit (Tm) und einer vorbestimmten maximalen Bewegungszeit (TM) liegt, abwärts gezählt von der Erzeugung eines Steuersignals des Getriebemotors (51), unter dem vorbestimmten Schwellenwert (S1) bleibt.

16. Nahrungsmittelzubereitungseinrichtung nach Anspruch 15, wobei das Gehäuse Folgendes umfasst:
- einen ersten Anschlag, der dazu eingerichtet ist, mit einem mit dem Steuerarm (51a) fest verbundenen Element zusammenzuwirken, um die erste Position des Blockierelements (52) zu definieren,
- einen zweiten Anschlag, der dazu eingerichtet ist, mit einem zweiten mit dem Steuerarm (51a) fest verbundenen Element zusammenzuwirken, um die zweite Position des Blockierelements (52) zu definieren.

## Claims

1. Method for controlling the operation of a food preparation device, said food preparation device comprising:
- a casing (40),
- a tank (10) mounted on the casing (40) and arranged to receive food to be prepared,
- at least one working mobile member (30) disposed in the tank (10) and arranged to work the food received in the tank (10),
- a stirring motor disposed in the casing (40), and arranged to displace the working mobile member (30),
- a removable cover (20) arranged to give the tank (10) a closed state wherein the tank (10) is closed by the cover (20),
- means for locking the cover (20) on the tank (10),
the cover (20) being arranged to be able to be displaced when the tank (10) is in its closed state between:
- an unlocked position on the tank (10), wherein the cover (20) is removed from the locking means, and
- a locked position on the tank (10), wherein the cover (20) engages with the locking means,
- preferably heating means arranged to provide heat for cooking the food received in the tank (10),
- means for securing the locking of the cover (20) in locked position, comprising:
- at least one mobile blocking member between a first position wherein the displacement of the cover (20) from the locked position to the unlocked position is enabled, and a second position wherein the blocking member impedes the displacement of the cover (20) from the locked position to the unlocked position,
- a geared motor (51) arranged to act on the blocking member so as to allow it to be displaced between its first position and its second position,
the control method comprising steps of:
- estimating a parameter representative of a torque provided by the geared motor (51) during a control of the geared motor (51),
- comparing the estimation of said parameter with a predetermined threshold (S1), and
- prohibiting the operation of the stirring motor and/or heating means as the estimation of said parameter during a control of the means for securing locking remains less than the predetermined threshold (S1) in a time interval comprised between a minimum displacement time (Tm) and a predetermined maximum displacement time (TM), counted from the generation of a geared-motor (51) control signal.

2. Control method according to claim 1, wherein the operation of the stirring motor and/or the heating means is enabled if during a control of the means for securing the locking, the estimation of the parameter is greater than the predetermined threshold (S1) at an instant comprised between an intermediate time (Ti) and the predetermined maximum displacement time (TM), the intermediate time (Ti) being comprised between the predetermined minimum displacement time (Tm) and the predetermined maximum displacement time (TM).

3. Control method according to claim 2, wherein the operation of the stirring motor and/or the heating means is enabled if during a control of the means for securing the locking, the estimation of the parameter is greater than the predetermined threshold (S1) and if a variation of said parameter over time is greater than a predetermined gradient, at an instant comprised between the predetermined minimum displacement time (Tm) and the intermediate time (Ti).

4. Control method according to one of claims 1 to 3, wherein the estimation of the parameter is not done or considered before a predetermined previous time (Tp), such as 100ms, counted from the generation of a geared-motor (51) control signal.

5. Control method according to claim 4, wherein if during a control of the means for securing the locking, the estimation of the parameter is greater than a predetermined second threshold (S2), less than or equal to the predetermined threshold (S1), at an instant comprised between the predetermined previous time (Tp) and the predetermined minimum displacement time (Tm), counted from the generation of a geared-motor (51) control signal, then a blocking counter is incremented by a value of 1.

6. Control method according to claim 5, also comprising a step of sending the user an item of blocking information if the blocking counter is incremented.

7. Control method according to one of claims 5 or 6, wherein the operation of the stirring motor and/or heating means is prohibited if, during a control of the means for securing locking, the estimation of said parameter:
- is greater than the predetermined second threshold (S2) at an instant comprised between the previous time (Tp) and the minimum displacement time (Tm),
- remains less than the predetermined threshold (S1) all throughout the controlling of the means for securing locking.

8. Control method according to one of claims 5 to 7, comprising a step of automatically controlling a change of direction of rotation of the geared motor (51), simultaneously or subsequently to the incrementation of the blocking counter.

9. Control method according to one of claims 5 to 8, wherein the means for securing locking of the cover (20) are considered as being in a blocked state if the blocking counter exceeds the value of 3.

10. Control method according to one of claims 5 to 9, wherein the means for securing locking the cover (20) are considered as being in a normal operating state if the blocking counter is not incremented following a subsequent control, the method thus comprising a step of resetting the blocking counter.

11. Control method according to one of claims 1 to 10, wherein the parameter representative of the torque provided by the geared motor (51) is an electric current consumed by the geared motor (51).

12. Control method according to claims 1 to 11, wherein the geared-motor (51) control signal is a direct current and with a sometimes positive or sometimes negative voltage along the direction of rotation to give to the geared motor (51).

13. Control method according to claim 12, wherein the estimation of the current consumed by the geared motor (51) is obtained by calculating an average value resulting from a sampling of values of the power current of the geared motor (51) during a geared-motor (51) control phase.

14. Control method according to claim 13, wherein the sampling frequency is 500Hz.

15. Food preparation device comprising:
- a casing (40),
- a tank (10) mounted on the casing (40) and arranged to receive food to be prepared,
- at least one working mobile member (30) disposed in the tank (10) and arranged to work the food received in the tank (10),
- a stirring motor disposed in the casing (40), and arranged to displace the working mobile member (30),
- a removable cover (20) giving the tank (10) a closed state wherein the tank (10) is closed by the cover (20),
- means for locking the cover (20) on the tank (10),
the cover (20) being arranged to be able to be displaced when the tank (10) is in its closed state between:
- an unlocked position on the tank (10), wherein the cover (20) is removed from the locking means, and
- a locked position on the tank (10), wherein the cover (20) engages with the locking means,
the food preparation device further comprising:
- preferably heating means arranged to provide heat for cooking the food received in the tank (10),
- means for securing the locking of the cover (20) in locked position, comprising:
- at least one mobile blocking member, such as a rod (52) comprising a blocking portion, mobile between a first position wherein the displacement of the cover (20) from the locked position to the unlocked position is enabled, and a second position wherein the blocking member impedes the displacement of the cover (20) from the locked position to the unlocked position,
- a geared motor (51) coupled with a control arm (51a) arranged to displace the blocking member between the first position and the second position,
- means for controlling the operation of the means for securing locking of the cover (20),
- geared-motor (51) control means arranged to achieve either a securing of the locking by bringing the blocking member to its second position, or a removal of the securing of the locking by bringing the blocking member to its first position,
the control means being arranged to:
- estimate a parameter representative of a torque provided by the geared motor (51) during a controlling of the geared motor (51) by the control means,
- compare the estimation of said parameter representative of the torque provided with a predetermined threshold (S1), and
- prohibit the operation of the stirring motor and/or heating means as the estimation of said parameter during a controlling of the geared motor (51) remains less than the predetermined threshold (S1) in a time interval comprised between a predetermined minimum displacement time (Tm) and a predetermined maximum displacement time (TM), counted from the generation of a geared-motor (51) control signal.

16. Food preparation device according to claim 15, wherein the casing comprises:
- a first abutment arranged to engage with a first element integral with the control arm (51a) so as to define the first position of the blocking member (52),
- a second abutment arranged to engage with a second element integral with the control arm (51a) so as to define the second position of the blocking member (52).
